Europäisches Patentamt

European Patent Office

Office européen des brevets

(11) Veröffentlichungsnummer: **0 171 349**
**A2**

## (12) EUROPÄISCHE PATENTANMELDUNG

(21) Anmeldenummer: 85730079.2

(22) Anmeldetag: **10.06.85**

(51) Int. Cl.⁴: **H 01 R 4/36,** H 01 R 13/595

(30) Priorität: **06.07.84 DE 8420905 U**

(43) Veröffentlichungstag der Anmeldung: **12.02.86**
**Patentblatt 86/7**

(84) Benannte Vertragsstaaten: **DE**

(71) Anmelder: **Heidemann, Holger, Ahornstrasse 2,**
**D-1000 Berlin 30 (DE)**

(72) Erfinder: **Heidemann, Holger, Ahornstrasse 2,**
**D-1000 Berlin 30 (DE)**
Erfinder: **Fröhlich, Günther, Dr. med., Haus San Michael,**
**D-5358 Bad Münsterelfel (DE)**

(54) **Verbindungsstück für elektrische Leitungen.**

(57) Bei diesem Verbindungsstück für elektrische Leitungen werden die zu verbindenden Aderenden der elektrischen Leitungen mit Hilfe eines Kernes (3), in dem jeweils für eine elektrische Ader Längsnuten angebracht sind, in denen jeweils eine metallische Schraubklemme (5) vorhanden ist, fest miteinander verbunden. Der Kern (3) besteht aus zwei, an der Längsseite verbundenen Hälften, wobei nach dem Verbinden der Aderenden durch die Schraubklemmen (5) die beiden Hälften des Kernes (3) zugeklappt werden, so dass der Kern (3) dann eine zylindrische Form annimmt. An den Enden des Kernes (3) ist jeweils ein Kunststoffbügel angebracht, der zugeschraubt wird und dabei auf die Ummantelung der elektrischen Leitung drückt und diese dadurch zugentlastet. Der Kern (3) wird nun noch durch zwei Gehäuseteile A (1) und B (2), die über den Kern (3) geschoben werden, geschützt. An den Enden des Kernes wird noch jeweils ein Zwiebelring (4) aufgeschoben, die den Kern beim überschieben der Gehäuseteile A (1) und B (2) gegen Wasser nach aussen abdichten. In der Mitte, wo die Gehäuseteile A (1) und B (2) beim Zusammenschieben aufeinandertreffen, verhindert ein O-ring (6), dass Wasser eindringt. Die Gehäuseteile A (1) und B (2) werden durch einen Bajonettverschluss verschlossen.

0171349

B e s c h r e i b u n g
==========================

"Verbindungsstück für elektrische Leitungen"

Das Verbindungsstück dient dazu:

1. durchtrennte elektrische Leitungen einwandfrei isoliert und
   zugfest wiederherzustellen,
2. zu kurze elektrische Leitungen durch Ansetzen eines anderen
   Kabels zu verlängern.

Bisher wurde ein durchtrenntes Stromkabel im Hausgebrauch
mangels anderer Möglichkeiten dadurch wiedervereinigt, daß man
die Enden mit einer Lüsterklemme vereinigte und mit Isolierband umwickelte, oder es wurden einfach die blanken Aderenden
zusammengedreht, einzeln isoliert und dann um diese Einzelisolierungen nochmals Isolierband gewickelt.

Das Verbindungsstück beseitigt diese Unzulänglichkeit indem
die einzelnen Adern einwandfrei gegeneinander isoliert vereinigt werden können, und das Kabel wieder auf Zug beansprucht
werden kann. Außer einem Werkzeug zur Abisolierung und einem
Schraubenzieher wird kein Werkzeug benötigt.

Das Verbindungsstück besteht aus Kunststoff. Zusätzlich enthält es drei metallische Schraubklemmen(5), einen O-Ring(6)
und zwei Zwiebelringe(4). Es setzt sich aus zwei Grundteilen
zusammen:

1. dem Kern(3)
2. dem zweigeteilten Gehäuse(1,2).

Der Kern(3) ist in seiner Grundform zylindrisch. Er besteht aus zwei in Längsrichtung geteilten Hälften, die an einer Längsnaht durch ein Filmscharnier miteinander verbunden sind, so daß der Kern(3) aufgeklappt werden kann. In der unteren Hälfte liegen in Längsrichtung drei Nuten parallel nebeneinander, die jeweils eine metallische Schraubklemme(5) aufnehmen. Die Nuten sind durch nichtleitende Kunststoffwände getrennt. An den nicht verbundenen Längsseiten des Kernes(3) ist jeweils eine Kante vorhanden, die beim Schließen in die andere Kante einrastet. An den Enden befinden sich an dem unteren Teil des Kernes(3) auf der gegenüberliegenden Seite des Filmscharnieres jeweils eine Bohrung. Gegenüber diesen Bohrungen sind jeweils durch Filmscharnier befestigt zwei Kunststoffbügel angebracht. Diese Kunststoffbügel weisen jeweils am Ende eine Bohrung auf, so daß beim Zusammenklappen der Bügel deren Bohrungen auf den Bohrungen am Ende der unteren Hälfte des Kernes(3) liegen. Durch diese Bohrungen ist jeweils eine Schraube geführt. An den Enden des Kernes(3) befindet sich jeweils ein Zwiebelring(4) (zur Anpassung an verschiedene Kabelquerschnitte), die beim Zusammenfügen der beiden Gehäuseteile(1,2) gestaucht werden, und so den Kern(3) nach außen wasserdicht abschließen.

Die Umhüllung besteht aus zwei zylindrischen Gehäuseteilen(1,2). Beide Gehäuseteile(1,2) sind innen glatt und laufen innen geringfügig und außen an den Enden konisch zu.

Bei dem Gehäuseteil A(1) ist am zur Mitte hingewandten Ende auf 16 mm die Wandstärke innen verringert, so daß an dieser Stelle der Innendurchmesser ca. 4 mm größer ist, als im übrigen Gehäuseteil A(1). An der Stelle, an der sich der Innendurchmesser in Form einer Stufe vergrößert, ist eine leichte Nut vorhanden, die den O-Ring(6) aufnimmt. An dem zur Mitte hingewandten Ende des Gehäuseteiles A(1), wo der Innendurchmesser ca. 4 mm größer ist, sind in der Gehäusewand drei, in gleichen Abständen angeordnete, rechtwinkelige Aussparungen (Teile des Bajonettverschlusses) vorhanden.

Das Gehäuseteil B(2) hat den gleichen Außendurchmesser wie das Gehäuseteil A(1). An dem zur Mitte hingewandten Ende verringert sich die Wandstärke außen auf einer Länge von ca. 16 mm um ca. 2 mm. Der Übergang besteht in Form einer Stufe. Der Außendurchmesser an dieser Stelle mit der geringeren Wandstärke ist geringfügig kleiner, als der Innendurchmesser des Gehäuseteiles A(1) am zur Mitte hingewandten Ende. An dem zur Mitte hingewandten Ende des Gehäuseteiles B(2) sind drei, in gleichen Abständen angeordnete, kreisförmige, ca. 5 mm Durchmesser starke, ca. 2 mm hohe Zylinder vorhanden, die beim Zusammenfügen der beiden Gehäuseteile in die rechtwinkeligen Aussparungen des Gehäuseteiles A(1) greifen.

Beide Gehäuseteile(1,2) sind auf den Enden ihrer Außenseiten mit einer in Längsrichtung verlaufenden Riffelung versehen.

In der praktischen Anwendung wird das Verbindungsstück wie folgt gehandhabt:

Zuerst werden die zu verbindenden Kabelenden gerade abgeschnitten. Dann wird auf das eine Kabelende das Gehäuseteil A(1) und auf das andere Kabelende das Gehäuseteil B(2) aufgeschoben. Danach werden auf beide Kabelenden die Zwiebelringe(4) aufgeschoben, nachdem sie auf den entsprechenden Kabeldurchmesser angepaßt worden sind. Nunmehr werden ca. 4 cm der Mantelisolation der Kabelenden entfernt. Die Isolierung der einzelnen Adern wird nun um ca. 1 cm entfernt. Jetzt werden die blanken Aderenden in den metallischen Schraubklemmen(5) zusammengeführt und durch Anziehen der Schrauben fest miteinander verbunden. Die Kabelenden werden nun an den Enden des Kernes(3) durch Festschrauben der Bügel auf Zugbelastung gesichert und der obere Teil des Kernes(3) wird auf den unteren Teil des Kernes(3) geklappt bis die Längskanten ineinander einrasten. Zuletzt werden die beiden Gehäuseteile(1,2) zusammengeschoben. Dabei werden die Zwiebelringe(4) an den Enden des Kernes(3) gestaucht und dichten so den Kern(3) an den Enden wasserdicht ab. Die endgültige Sicherung der Kabelverbindung erfolgt nun durch Drehen der beiden Gehäuseteile(1,2) gegeneinander, so daß die drei kreisförmigen Anhebungen des Gehäuseteiles B(2) in die drei rechtwinkeligen Aussparungen des Gehäuseteiles A(1) in Form eines Bajonettverschlusses greifen, wobei durch Stauchung des O-Ringes(6) eine Wasserabdichtung in der Mitte erfolgt.

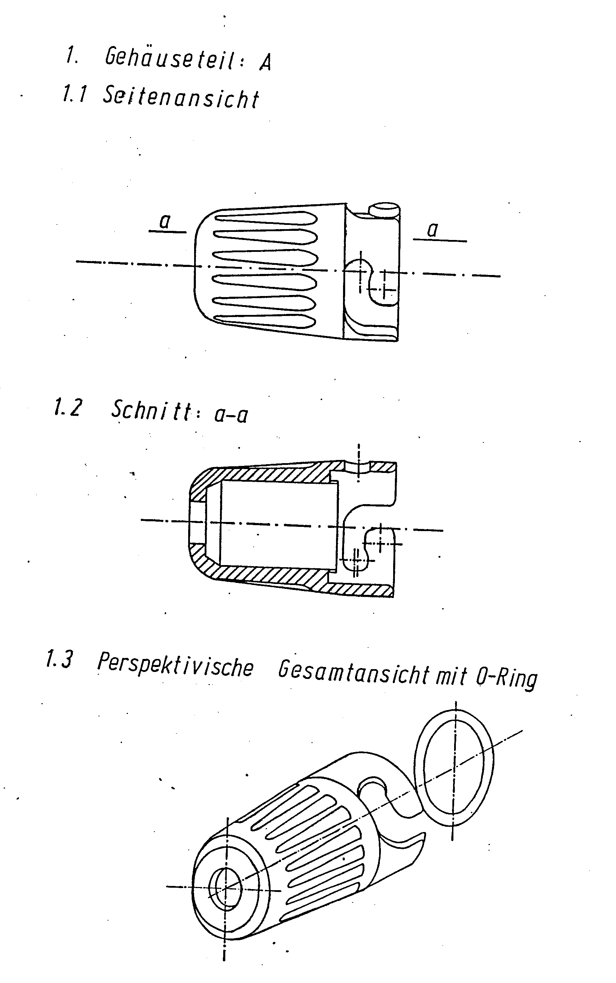

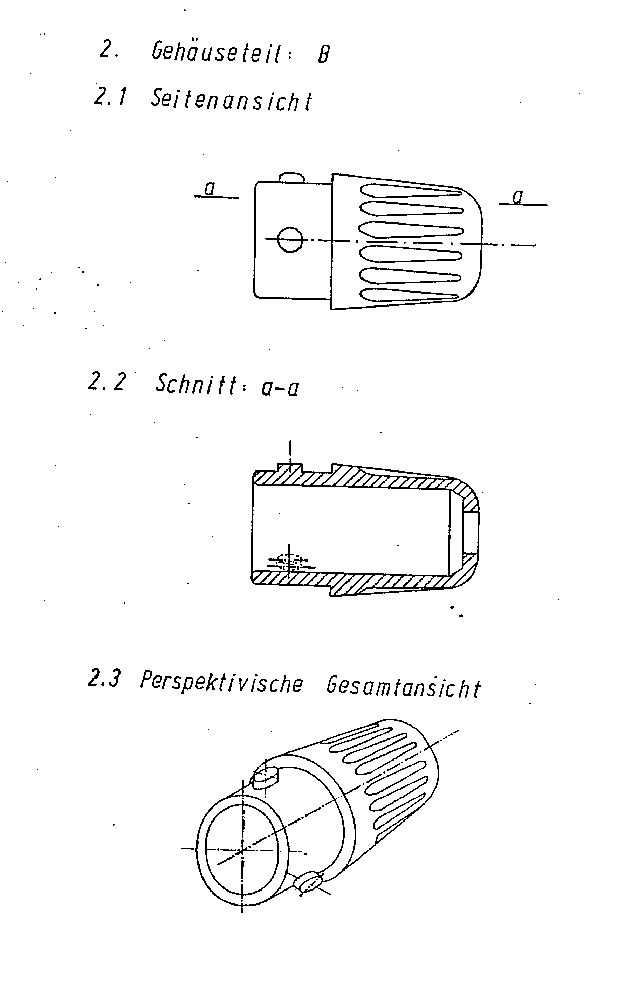

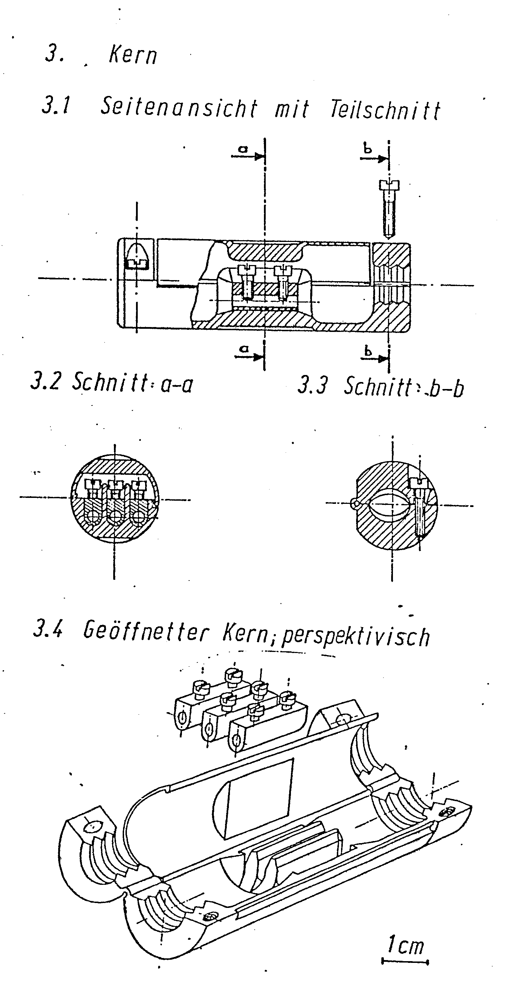

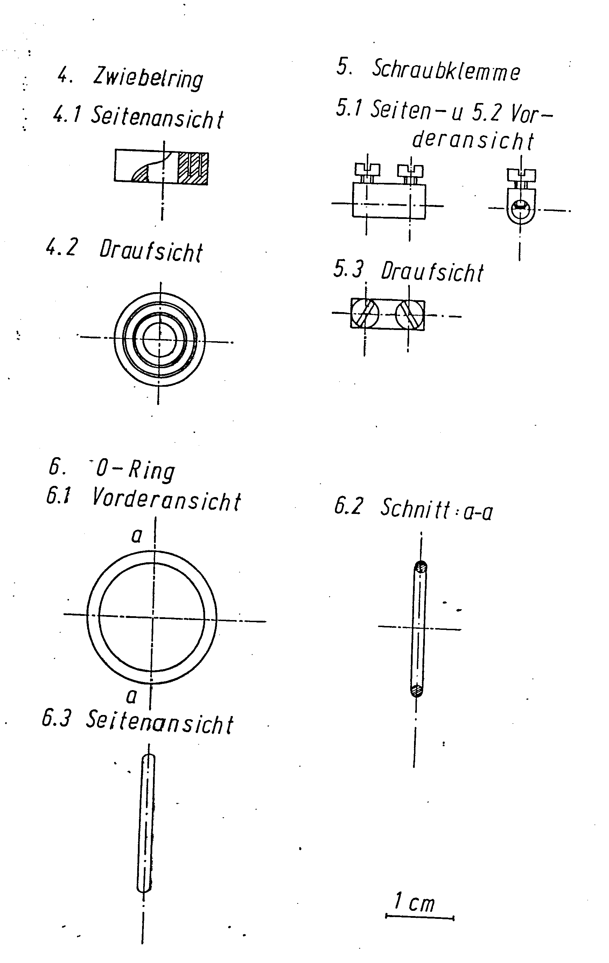

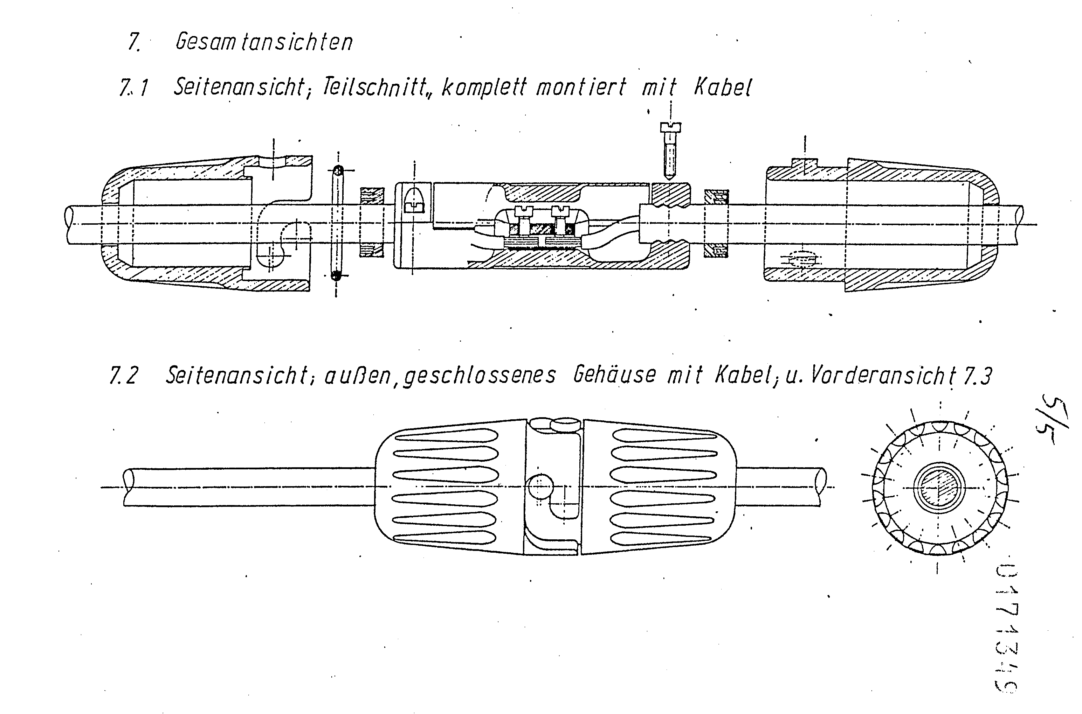

Patentansprüche

"Verbindungsstück für elektrische Leitungen"

1. Verbindungsstück für elektrische Leitungen, dadurch gekennzeichnet, daß ein zylindrisch geformter Kern auf seiner unteren Hälfte drei Längsnuten aufweist, die durch nichtleitende Kunststoffwände voneinander getrennt sind, welche je eine metallische Schraubklemme(5) aufnehmen, mit denen die zu verbindenden blanken Aderenden des Kabels elektrisch fest verbunden werden, die obere Hälfte des Kernes(3) auf die untere Hälfte des Kernes(3) geklappt wird, einrastet; wobei an den Enden des Kernes(3) eine Zugentlastung vorgesehen ist, dergestalt, daß ein Kunststoffbügel rechtwinkelig zur Zugrichtung durch Anziehen einer Schraube auf die Mantelisolation des Kabels drückt, und so das Kabel am Kern(3) fixiert; welcher durch Zusammenfügen der Gehäuseteile A(1) und B(2) nach außen abgeschlossen und durch Drehen der Gehäuseteile gegeneinander fest verschlossen wird.

2. Verbindungsstück für elektrische Leitungen nach Anspruch 1, dadurch gekennzeichnet, daß sich an den Enden des Kernes(3) jeweils ein Zwiebelring(4) zur Anpassung an verschiedene Kabelquerschnitte befindet, der beim Zusammenfügen der Gehäuseteile A(1) und B(2), welche an ihren Enden innen geringfügig konisch zulaufen, gestaucht wird, und so den Kern(3) an den Enden nach außen wasserdicht abschließt.

3. Verbindungsstück für elektrische Leitungen nach Anspruch 1, dadurch gekennzeichnet, daß auf dem Gehäuseteil A(1) an dem zur Mitte hinweisenden Ende auf der Innenseite eine umlaufende Nut eingelassen ist, die einen O-Ring(6) aufnimmt, welcher beim Zusammenfügen der Gehäuseteile A(1) und B(2) gestaucht wird, und so den Kern(3) in der Mitte nach außen wasserdicht abschließt.

0171349

4. Verbindungsstück für elektrische Leitungen nach Anspruch 1, dadurch gekennzeichnet, daß das zur Mitte hingewandte Ende des Gehäuseteiles A(1) rechtwinkelige Aussparungen aufweist, die beim Zusammenfügen der Gehäuseteile A(1) und B(2) durch Drehen gegeneinander hinter eine gleiche Anzahl von Anhebungen auf dem Gehäuseteil B(2) greifen, einrasten, und so die Kabelverbindung fest verschließen (Bajonettverschluß).

5. Verbindungsstück für elektrische Leitungen nach Anspruch 1, dadurch gekennzeichnet, daß die untere Hälfte des zylindrischen Kernes(3) mit den Schraubklemmen(5) durch Zuklappen und Einrasten der oberen Hälfte des Kernes(3) gegen Berührung von außen gesichert ist.

Unteransprüche:

6. Verbindungsstück für elektrische Leitungen, dadurch gekennzeichnet, daß der Kern(3) mehr als drei Längsnuten enthält, die die Schraubklemmen(5) zur festen elektrischen Verbindung aufnehmen, so daß die Verbindung von Kabeln mit mehr als drei Adern möglich ist.

7. Verbindungsstück für elektrische Leitungen, dadurch gekennzeichnet, daß anstelle der Schraubklemmen(5) in den Längsnuten schraubenlose Anschlußklemmen (Käfigzugfeder) mit zweiseitiger Lösewippe, bzw. Euroklemmen mit Drahtschutz zur festen elektrischen Verbindung der blanken Aderenden verwendet werden.

8. Verbindungsstück für elektrische Leitungen, dadurch gekennzeichnet, daß anstelle der drei rechtwinkeligen Aussparungen im Gehäuseteil A(1) und der drei kreisförmigen zylindrischen Erhebungen auf dem Gehäuseteil B(2) lediglich zwei sich gegenüberliegende Aussparungen, und zwei sich gegenüberliegende zylindrische Anhebungen angebracht sind.

0171349

1. Gehäuseteil: A

1.1 Seitenansicht

1.2 Schnitt: a-a

1.3 Perspektivische Gesamtansicht mit O-Ring

## 2. Gehäuseteil: B

### 2.1 Seitenansicht

### 2.2 Schnitt: a-a

### 2.3 Perspektivische Gesamtansicht

3. Kern

3.1 Seitenansicht mit Teilschnitt

3.2 Schnitt a-a   3.3 Schnitt b-b

3.4 Geöffneter Kern; perspektivisch

1cm

4.   Zwiebelring

4.1 Seitenansicht

4.2  Draufsicht

5.   Schraubklemme

5.1 Seiten- u 5.2 Vor-
      deransicht

5.3  Draufsicht

6.   O-Ring
6.1  Vorderansicht

a

a

6.3 Seitenansicht

6.2  Schnitt: a-a

1 cm

7. Gesamtansichten

7.1 Seitenansicht; Teilschnitt, komplett montiert mit Kabel

7.2 Seitenansicht; außen, geschlossenes Gehäuse mit Kabel; u. Vorderansicht 7.3